# DEMANDE DE BREVET EUROPEEN

(11) **EP 1 111 290 A1**
(43) Date de publication de la demande: **27.06.2001**
(21) Numéro de dépôt: 00403483.1
(22) Date de dépôt: 12.12.2000
(51) Int. Cl.: F16M 13/02, H01Q 1/12

(54) **Dispositif de fixation d'un équipement sur un mât**

(30) Priorité: 21.12.1999 FR 9916141
(71) Demandeur: SAGEM SA, 75116 Paris (FR)
(72) Inventeur: Forja, Christian, 91320 Wissous (FR); Roger, Christian, 75005 Paris (FR); Hamelin, Patrice, 77340 Pontault Combault (FR)
(74) Mandataire: Fruchard, Guy

(57) **Abrégé**

Dispositif de fixation d'un équipement sur un mât, ce dispositif comprenant une plaque (3) équipée de tiges filetées (9) s'étendant perpendiculairement à la plaque (3) et portant des profilés de fixation (32) maintenus par des écrous (34), la plaque (3) étant en outre équipée de moyens de fixation d'une contreplaque (22) sur un côté opposé aux profilés de fixation (32), les moyens de fixation de la contreplaque (22) étant disposés autour de celle-ci dans des positions adjacentes à un bord de la contreplaque (22) et comportent des organes de serrage (28, 29 ; 30, 31) prenant appui sur la contreplaque.

## Description

La présente invention concerne un dispositif de fixation d'un équipement sur un mât, notamment bien que non exclusivement un dispositif de fixation d'un relais hertzien sur un mât.

On connaît des dispositifs de fixation permettant de monter un équipement, par exemple un relais hertzien sur un mât tout en permettant un réglage de la position de l'équipement tant en site qu'en azimut. Les dispositifs connus comprennent une plaque équipée de profilés de fixation permettant de monter la plaque sur un mât tout en assurant un réglage en site, et une contreplaque fixée sur un côté de la plaque opposé aux profilés de fixation et adaptée à supporter l'équipement. Les moyens de fixation de la plaque sur le mât comprennent généralement une série de tiges filetées s'étendant perpendiculairement à la plaque et portant les profilés de fixation maintenus par des écrous. Afin de permettre un positionnement en azimut de l'équipement, la contreplaque comporte généralement des ouvertures oblongues en arc de cercle et la contreplaque est montée sur une série de boulons fixés à la plaque et passant à travers les ouvertures oblongues de la contreplaque, des écrous de serrage étant montés sur les boulons pour assurer un blocage de la contreplaque par rapport à la plaque après avoir réalisé un positionnement en azimut de l'équipement porté par la contreplaque.

Lorsque l'on souhaite effectuer un réglage en azimut de l'équipement, il suffit donc de desserrer les écrous de serrage et de faire pivoter la contreplaque par rapport à la plaque. Toutefois, si le réglage implique un débattement supérieur à celui qui est possible compte tenu de la longueur des lumières oblongues, en particulier lorsque la contreplaque a été montée par rapport à la plaque selon une position exactement opposée à celle qui est requise, il est nécessaire de défaire complètement les écrous de serrage, d'espacer la contreplaque d'une distance suffisante par rapport à la plaque pour extraire les boulons des lumières oblongues de la contreplaque, de réorienter la contreplaque, de réintroduire les lumières oblongues de la contreplaque autour des boulons, puis de remettre en place les écrous de serrage. Ces opérations qui paraissent banales lorsqu'elles sont effectuées en atelier sont beaucoup plus délicates à réaliser lorsque le dispositif de fixation est déjà monté sur un mât, l'opérateur devant alors supporter l'équipement à bout de bras à partir de la nacelle il se trouve et risquant en outre de faire tomber les écrous lorsque ceux-ci sont retirés des boulons.

Selon l'invention on propose un dispositif de fixation d'un équipement sur un mât, ce dispositif comprenant une plaque équipée de tiges filetées s'étendant perpendiculairement à la plaque et portant des profilés de fixation maintenus par des écrous, la plaque étant en outre équipée de moyens de fixation d'une contreplaque sur un côté opposé aux profilés de fixation, les moyens de fixation de la contreplaque étant disposés autour de celle-ci dans des positions adjacentes à un bord de la plaque et comportant des organes de serrage prenant appui sur la contreplaque.

Ainsi, la disposition des moyens de fixation autour de la contreplaque permet de faire pivoter celle-ci librement quelle que soit la distance angulaire sur laquelle elle doit être déplacée sans qu'il soit nécessaire de procéder à un démontage complet des organes de serrage.

Selon une version avantageuse de l'invention, les tiges filetées portant les profilés de fixation de la plaque traversent celle-ci et supportent les organes de serrage de la contreplaque. On minimise ainsi le nombre de pièces de sorte que le coût du dispositif de fixation est réduit non seulement en terme de coût des pièces le constituant mais également en terme de coût de main-d'oeuvre lors de l'assemblage du dispositif de fixation.

D'autres caractéristiques et avantages de l'invention apparaîtront à la lecture de la description qui suit d'un mode de réalisation particulier non limitatif de l'invention en référence aux figures ci-jointes parmi lesquelles :

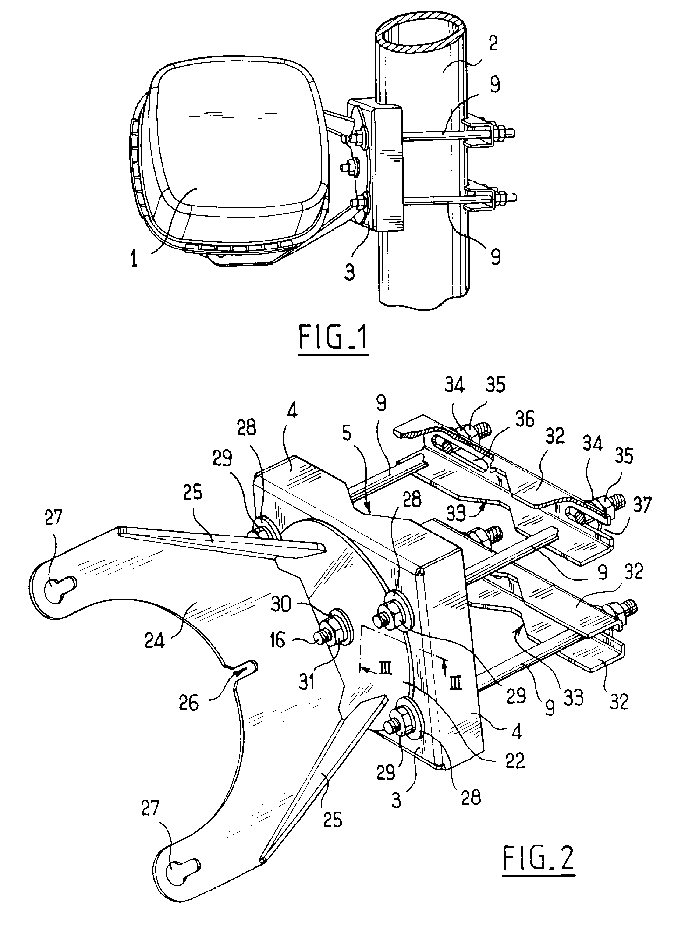

- la figure 1 est une vue en perspective d'un équipement monté sur un mât au moyen du dispositif de fixation selon l'invention,
- la figure 2 est une vue en perspective partiellement écorchée du dispositif de fixation selon l'invention en position assemblée avant sa mise en place sur un mât,
- la figure 3 est une vue en perspective éclatée d'une partie du dispositif selon l'invention en coupe selon la ligne III-III de la figure 2.

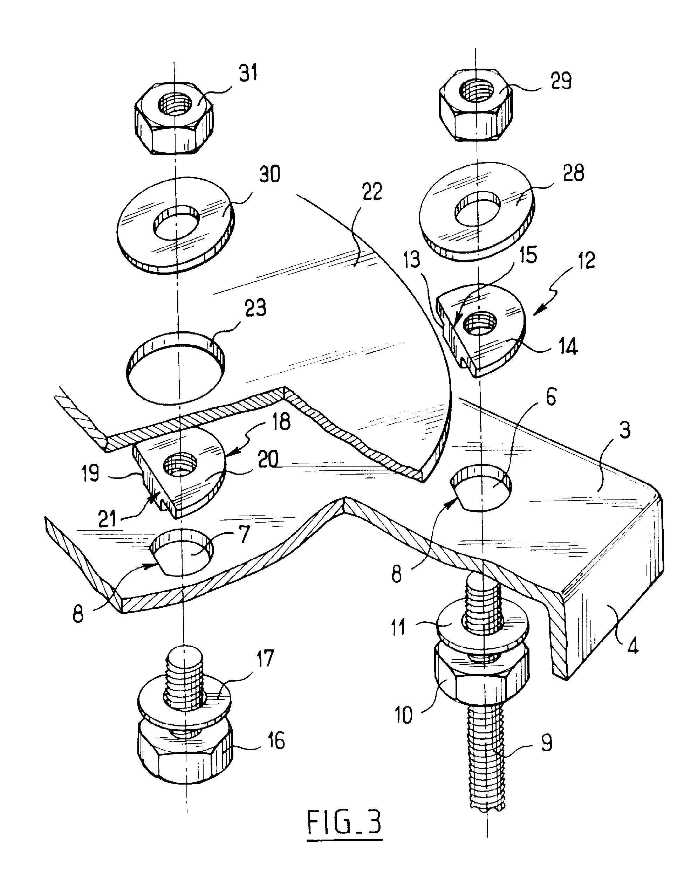

En référence aux figures, le dispositif de fixation selon l'invention est destiné à permettre le montage d'un équipement 1 sur un mât 2. Dans le mode de réalisation préféré illustré, le dispositif de fixation comporte une plaque carrée 3 réalisée à partir d'une tôle dont les bords 4 sont repliés et soudés entre eux pour assurer un raidissement de la plaque 3. Deux bords opposés de la plaque 3 comportent en outre une encoche 5 permettant d'assurer une mise en appui stable de la plaque 3 contre le mât 2. La plaque 3 est percée de quatre trous 6 (voir figure 3) disposés au sommet d'un carré ainsi que d'un trou semblable 7 percé à l'intersection des diagonales du carré. Les trous 6 et le trou 7 sont généralement cylindriques mais comportent un méplat 8. Le méplat 8 des trous 6 est tourné vers le trou 7 et s'étend de préférence perpendiculairement à la diagonale du carré. L'orientation du méplat 8 du trou 7 est quelconque. Des tiges filetées 9 sont montées dans les trous 6 pour s'étendre perpendiculairement à la plaque 3. A cet effet, un écrou 10 est monté sur chaque tige filetée 9. Une rondelle 11 est de préférence associée à l'écrou 10 et la tige filetée est engagée dans un trou 6 depuis le côté de la plaque 3 vers lequel les bords 4 sont repliés et l'extrémité correspondante de la tige filetée 9 est vissée dans une rondelle-écrou 12 comportant un fût 13 cylindrique ayant un diamètre externe légèrement inférieur à la partie cylindrique du trou 6, et une collerette circulaire 14 à une extrémité du fût 13. Le fût 13 et la collerette 14 sont sectionnés pour réaliser un méplat 15 dont la largeur sur le fût 13 correspond à la largeur du méplat 8 des trous 6. Lors du vissage de la tige filetée 9 le fut 13 de la rondelle-écrou 12 s'engage dans le trou 6 et est bloquée en rotation par la coopération du méplat 15 avec le méplat 8. Lorsque la tige filetée 9 a été vissée de la longueur désirée dans la rondelle-écrou 12, l'écrou 10 est serré pour assurer un blocage de la tige filetée 9 par pincement de la plaque 3 entre l'écrou 10 et la collerette 14 de la rondelle écrou 12. La tige filetée 9 est ainsi bloquée en rotation et fixée perpendiculairement à la plaque 3. La collerette 14 de la rondelle-écrou 12 s'étend en saillie sur le côté de la plaque 3 opposé aux bords rabattus 4. De la même manière un boulon 16 équipé d'une rondelle 17 est monté à travers le trou 7 et vissé dans une rondelle-écrou 18 ayant un fût 19, une collerette 20 et un méplat 21 respectivement analogues au fût 13, à la collerette 14 et au méplat 15 de la rondelle-écrou 12.

Le dispositif de fixation selon l'invention comporte en outre une contreplaque 22. Dans le mode de réalisation préféré illustré, la contreplaque 22 est circulaire et a un diamètre légèrement inférieur à la distance qui sépare les méplats 15 de deux rondelles-écrous 12 prises selon une diagonale du carré. La contreplaque 22 comporte en outre un trou central 23 ayant un diamètre légèrement supérieur au diamètre de la partie circulaire de la collerette 20. Lorsque la contreplaque 22 est mise en place, le trou central 23 est engagé sur la collerette 20 de la rondelle-écrou 18. Les méplats 15 des rondelles-écrous 12 forment des butées latérales pour la contreplaque 22 et évitent un décentrage de celle-ci même si le trou central 23 est largement dimensionné par rapport à la collerette 20. La contreplaque 22 porte en outre un berceau 24 soudé perpendiculairement à la contreplaque 22 et rigidement solidarisé avec celle-ci par des ailes 25 qui sont obtenues par pliage de la tôle formant le berceau 24 et qui sont également soudées à la contreplaque 22. Le berceau 24 comporte une encoche 26 débouchant radialement sur une partie de bord circulaire du berceau 24 et deux lumières en trou de serrure 27 réalisées dans les branches du berceau 24. L'encoche 26 et les lumières 27 permettent un positionnement et un verrouillage aisé et rapide de l'équipement 1 sur le berceau 24 sans démontage de la contreplaque 22 de sorte que lorsque celle-ci a été positionnée en azimut il est possible de démonter et remonter l'équipement 1 sans avoir à refaire de réglage.

La contreplaque 22 est maintenue assemblée avec la plaque 3 par des rondelles 28 qui sont montées sur les tiges filetées 9 du côté des rondelles-écrous 12 et chevauchent le bord de la contreplaque 22. Les rondelles 28 sont maintenues en appui sur la contreplaque 22 par des écrous 29. La contreplaque 22 est également maintenue serrée contre la plaque 3 par une rondelle 30 engagée sur le boulon 16 et mise en appui sur la contreplaque 22 par un écrou 31.

Par ailleurs, la plaque 3 est fixée au mât 2 par des profilés 32 formés par une plaque de tôle repliée en U et comportant des encoches en V 33. Les profilés 32 sont montés sur les tiges filetées 9 et sont serrés contre le mât par des écrous 34 et des contre-écrous 35 montés sur les tiges filetées 9. Afin de permettre une mise en place du dispositif de fixation selon l'invention sur le mât 2 sans démonter les profilés 32, c'est-à-dire sans qu'il soit nécessaire de dévisser totalement les écrous 34 et les contre-écrous 35, les profilés 32 comportent à une extrémité une lumière oblongue fermée 36 traversée par une tige filetée 9 et à l'extrémité opposée une lumière oblongue 37 qui débouche sur l'extrémité correspondante du profilé.

Lorsque l'on souhaite procéder au montage du dispositif de fixation selon l'invention, il suffit donc de desserrer les contre-écrous 35 et les écrous 34 pour permettre un coulissement des profilés 32 jusqu'au moment où les lumières oblongues 37 échappent à la tige filetée 9 correspondante. Il est alors possible de faire pivoter les profilés 32 pour permettre un engagement des tiges filetées 9 de part et d'autre du mât 2 puis de ramener les profilés 32 perpendiculairement au mât et les engager à nouveau sur les tiges filetées 9 correspondantes. Les écrous 34 et les contre-écrous 35 sont alors serrés de façon que la plaque 3 soit bloquée sur le mât 2. La position de la plaque 3 par rapport au mât 2 détermine le positionnement en site de l'équipement 1.

Après verrouillage de la plaque 3 sur le mât 2, le positionnement en azimut de l'équipement 1 est effectué en desserrant les écrous 29 et l'écrou 31 et en faisant pivoter la contreplaque 22 sur le pivot formé par la collerette 20 de la rondelle-écrou 18. Un premier verrouillage dans la position désirée est assuré par le serrage de l'écrou 31 et un verrouillage complémentaire est assuré par le serrage des écrous 29 afin que le positionnement en azimut de l'équipement 1 ne soit pas modifié lorsque cet équipement est soumis à des bourrasques de vent. A ce propos, on notera que les collerettes 14 et 20 ont une épaisseur inférieure à la contreplaque 22 afin que le serrage des écrous 29 et 31 assure véritablement un pincement de la contreplaque 22 entre les rondelles 28 et 30 d'une part et la plaque 3 d'autre part.

Bien entendu, l'invention n'est pas limitée au mode de réalisation décrit et on peut y apporter des variantes de réalisation sans sortir du cadre de l'invention tel que défini par les revendications.

En particulier, bien que l'invention ait été décrite en relation avec une contreplaque circulaire, on peut réaliser une contreplaque ayant un contour polygonal ou un contour curviligne non régulier. On peut également prévoir de supprimer le pivot formé par la rondelle-écrou centrale 18, la contreplaque 22 étant alors centrée uniquement par les méplats 15 des rondelles-écrous 12.

Bien que selon l'invention on ait prévu un montage dans lequel les tiges filetées 9 servent simultanément à la fixation de la plaque 3 sur le mât 2 et à la fixation de la contreplaque 22 sur la plaque 3, on peut prévoir des moyens de fixation dans lesquels ces deux fonctions sont dissociées. On peut également fixer aux bords repliés 4 de la plaque 3 des profilés supplémentaires et leur associer des profilés 32 pour renforcer la fixation de la plaque 3 sur le mât 2.

Dans le cas où le dispositif est réalisé avec un pivot central on peut prévoir des moyens de serrage périphériques de la contreplaque 22 ne comprenant pas de butée latérale.

## Revendications

1. Dispositif de fixation d'un équipement (1) sur un mât (2), ce dispositif comprenant une plaque (3) équipée de tiges filetées (9) s'étendant perpendiculairement à la plaque (3) et portant des profilés de fixation (32) maintenus par des écrous (34), la plaque (3) étant en outre équipée de moyens de fixation d'une contreplaque (22) sur un côté opposé aux profilés de fixation (32), caractérisé en ce que les moyens de fixation de la contreplaque (22) sont disposés autour de celle-ci dans des positions adjacentes à un bord de la contreplaque (22) et comportent des organes de serrage (28, 29 ; 30, 31) prenant appui sur la contreplaque.

2. Dispositif selon la revendication 1, caractérisé en ce que les tiges filetées (9) portant les profilés de fixation (32) de la plaque (3) traversent celle-ci et supportent les organes de serrage (28, 29) de la contreplaque (22).

3. Dispositif selon la revendication 2, caractérisé en ce que les tiges filetées (9) sont fixées à la plaque (3) par des rondelles-écrous (12) disposées sur un côté de la plaque (3) et des écrous de blocage (10) disposés sur un côté opposé de la plaque (3).

4. Dispositif selon la revendication 3, caractérisé en ce que les rondelles-écrous (12) sont disposées sur le côté de la plaque (3) portant la contreplaque (22) et comportent des collerettes (14) ayant une épaisseur inférieure à la contreplaque (22).

5. Dispositif selon la revendication 4, caractérisé en ce que la contreplaque (22) est circulaire et les collerettes (14) des rondelles-écrous (12) comportent un méplat (15) s'étendant en regard du bord de la contreplaque (22).

6. Dispositif selon l'une des revendications précédentes, caractérisé en ce que la contreplaque (22) comporte un pivot central (20).

7. Dispositif selon la revendication 6, caractérisé en ce que le pivot central comprend un boulon (16) traversant la plaque et fixé à celle-ci par une rondelle-écrou (18) ayant une collerette (20) s'étendant dans une ouverture circulaire (23) de la contreplaque (22).

8. Dispositif selon la revendication 7, caractérisé en ce que le pivot central comporte un écrou de serrage (31).

9. Dispositif selon l'une des revendication précédentes, caractérisé en ce que la contreplaque (22) comporte au moins une encoche de positionnement (26) de l'équipement (1).

10. Dispositif selon l'une des revendications précédentes, caractérisé en ce que les profilés de fixation (32) comportent des lumières oblongues (36, 37) traversées par les tiges filetées (9), les lumières oblongues (37) adjacentes à une extrémité de chaque profilé étant débouchantes sur cette extrémité.
